# EUROPEAN PATENT APPLICATION

(11) **EP 0 731 432 A1**
(43) Date of publication of application: **11.09.1996**
(21) Application number: 96103466.7
(22) Date of filing: 06.03.1996
(51) Int. Cl.: G09B 15/00, G10H 1/00

(54) **Electronic device for the study and practice of a musical instrument, particularly a set of percussion instruments**

(30) Priority: 10.03.1995 IT TO950179
(71) Applicant: COMUS S.p.A., 62100 Macerata (IT)
(72) Inventor: Ciliento, Giuseppe, 62019 Recanati (IT)
(74) Representative: Jorio, Paolo

(57) **Abstract**

An electronic device (1) for the study and practice of a musical instrument, particularly a set of percussion instruments; the device presenting a sound generator (13), a microprocessor control unit (3), a memory (5) communicating with the control unit (3) and containing data relative to musical events, and a display device (20) cooperating with the control unit (3); the display device (20) presenting a number of light indicators (20a-20d), each representing a respective percussion element, and which is activated synchronously with the musical events reproduced.

## Description

The present invention relates to an electronic device for the study and practice of a musical instrument, particularly a set of percussion instruments.

More specifically, it is an object of the present invention to provide an electronic device connectable to a set of percussion instruments, and designed to provide the student with teach-yourself acoustic and optical signals.

According to the present invention, there is provided an electronic device for the study and practice of a musical instrument, particularly a set of percussion instruments, as claimed in Claim 1.

A preferred, non-limiting embodiment of the present invention will be described by way of example with reference to the accompanying drawings, in which:
Figure 1 shows an electronic device for the study and practice of a musical instrument, particularly a set of percussion instruments, in accordance with the teachings of the present invention;
Figure 2 shows a simplified electric diagram of the Figure 1 device;
Figure 3 shows a set of percussion instruments featuring an electronic device in accordance with the present invention.

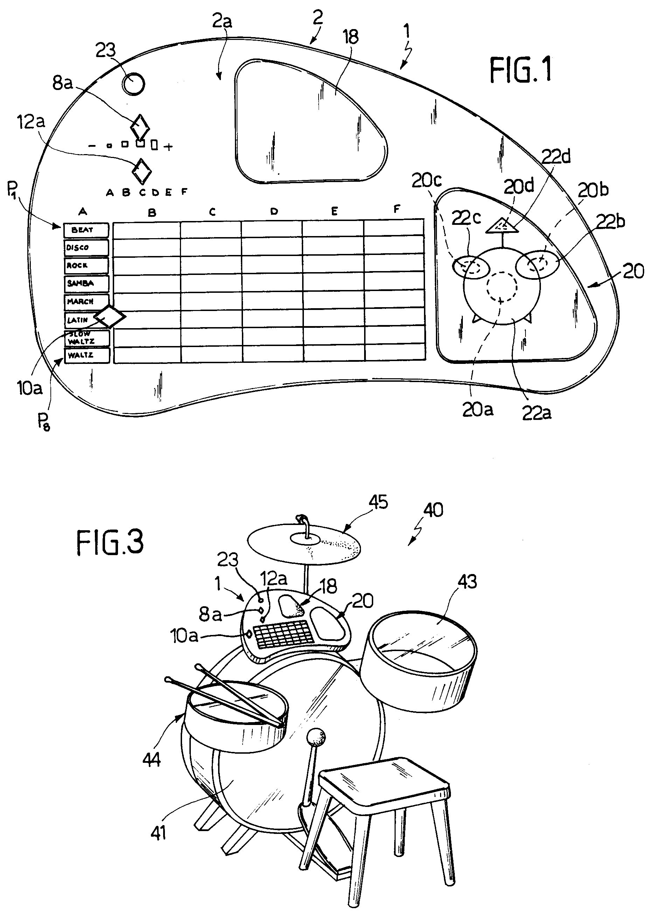

Number 1 in Figure 1 indicates an electronic device for the study and practice of a musical instrument, particularly a set of percussion instruments.

Device 1 comprises an electronic circuit (not shown) housed inside a plastic casing 2 presenting a front panel 2a fitted with hand controls (described in detail later on) for operating the device.

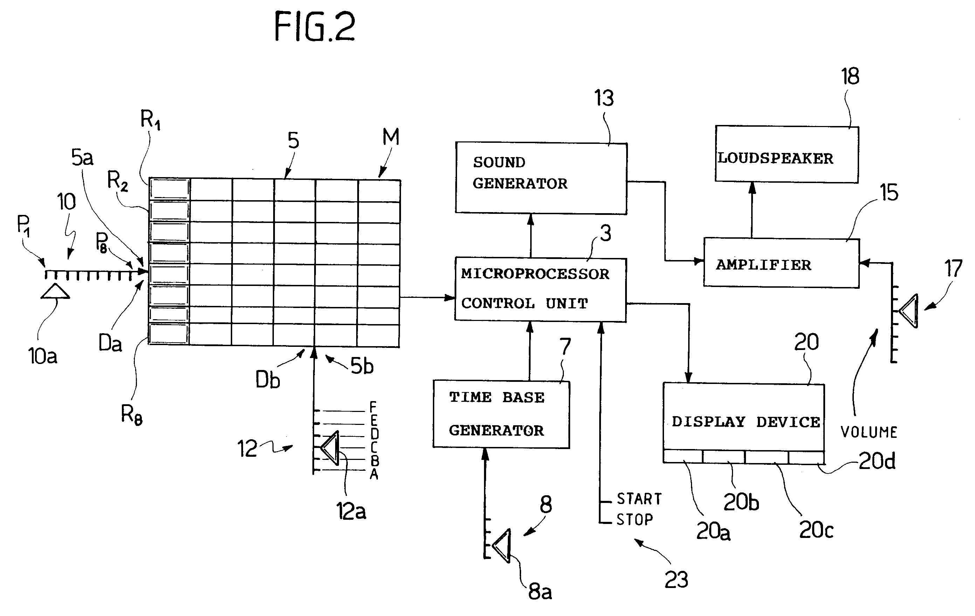

As shown in Figure 2, device 1 comprises an electronic microprocessor control unit 3 communicating with a memory 5 and a time base generator 7.

Time base generator 7 also cooperates with a selector (e.g. four-position selector) 8 for regulating the speed at which a given tempo or piece of music is performed, and which presents a hand-operated slide 8a on panel 2a.

Control unit 3 also communicates with a sound generator 13 output-connected to an amplifier 15 presenting a volume control 17 and which supplies an output loudspeaker 18.

Control unit 3 also communicates with a display device 20 which, in the embodiment shown, presents four light sources, e.g. bulbs, 20a, 20b, 20c, 20d (Figure 1) for lighting respective screens 22a, 22b, 22c, 22d representing different parts of the percussion equipment. More specifically, screens 22a, 22b, 22c, 22d respectively represent a bass drum, medium drum, small drum and cymbal. Control unit 3 also presents a START/STOP button 23 for turning device 1 on and off.

According to the present invention, memory 5 defines a rectangular array M addressable by a first and second digital signal Da, Db supplied to respective inputs 5a, 5b of array M.

More specifically, first digital signal Da may assume eight discrete values, each corresponding to a respective position of an eight-position linear selector 10 with a hand-operated slide 10a on panel 2a (Figure 1).

Second digital signal Db may assume six discrete digital values, each corresponding to a respective position of a six-position (A,B,C,D,E,F in Figure 1) linear sector 12 with a hand-operated slide 12a on panel 2a.

Array M therefore presents eight rows R1-R8 addressable by setting slide 10a to respective positions p1-p8 (Figure 1); and each row R1-R8 comprises six storage locations addressable individually by means of slide 12a.

More specifically, the first position (A) of slide 12a selects the first column in the array and the first storage locations of rows R1-R8, in which are stored respective digital signals corresponding to digitized tempos (e.g. BEAT, DISCO, ROCK, SAMBA, MARCH, LATIN, SLOW WALTZ, WALTZ).

Similarly, the second, third, fourth, fifth and sixth positions (B-F) of slide 12a select successive storage locations of rows R1-R8, in which are stored respective digitized music pieces.

The digitized tempo or music signal also comprises a series of digital codes, which are decoded by control unit 3 to produce light signals on display device 20.

More specifically, when a tempo is selected, the digital codes activate the light source (or sources) corresponding to the percussion element to be played, when the light source comes on, to produce the same sound produced simultaneously by the memorized tempo. Device 1 thus provides for reading the digitized tempo in the memory (and reproducing it by means of loudspeaker 18), and for simultaneously and synchronously activating the light sources 20a-20d indicating which percussion elements to play to perform the tempo.

The digital codes also provide for activating the light source (or sources) indicating the percussion element to play to produce the accompanying sound of the corresponding digitized piece reproduced. That is, when a music piece is selected, device 1 provides for reading the digitized piece in the memory (and reproducing it by means of loudspeaker 18), and for simultaneously activating the light sources indicating which percussion elements to play to produce the accompaniment of the reproduced piece.

In actual use, device 1 is used in conjunction with a set 40 (Figure 3) of percussion instruments, in particular comprising a pedal-operated bass drum 41, a medium drum 43, a small drum 44, and a cymbal 45.

At the start of the teach-yourself cycle, slide 12a is set to position A and slide 10a to the required tempo; device 1 is then turned on using START button 23 to reproduce the selected tempo with no accompanying music; and light sources 20a-20d, indicating which percussion elements to play, come on in time with the selected tempo. This therefore provides for both audio and visual teach-yourself instruction by providing the player simultaneously with the tempo and a visual indication of which percussion element to play to reproduce it.

Once the player reaches a certain degree of proficiency, slide 12a may be set to one of positions B-F, which provides for playing a piece of music for accompaniment. In this case also, light sources 20a-20d come on in time with the music to indicate which percussion elements to play to accompany it.

Slide 8a provides for selecting the speed and so regulating the difficulty with which the tempo or music piece is performed.

Clearly, changes may be made to the electronic device as described and illustrated herein without, however, departing from the scope of the present invention.

## Claims

1. An electronic device for the study and practice of a musical instrument, particularly a set of percussion instruments, and comprising:
- sound generating means (13);
- control means (3) cooperating with said sound generating means (13); and
- storage means (5) cooperating with said control means (3) and containing data correlated to musical events;
characterized in that it comprises display means (20) cooperating with said control means (3);
said display means (20) presenting a number of light indicators (20a-20d), each representing a respective element (41, 43, 44, 45) of the musical instrument (40) for study;
said light indicators (20a-20d) being activated synchronously with said musical events.

2. A device as claimed in Claim 1, characterized in that said storage means (5) contain digital signals corresponding to selectable tempos (10a);
said sound generating means (13) also reproducing (18) said tempos; and said control means (3) controlling light signals on said display means (20) to activate at least one light indicator (20a-20d) corresponding to the instrument element to be played, when the light indicator is activated, to produce the same sound produced simultaneously by the stored tempo.

3. A device as claimed in Claim 1 or 2, characterized in that said storage means (5) contain digital signals corresponding to selectable digitized music pieces (12a);
said sound generating means (13) also reproducing (18) said music pieces; and said control means (3) controlling light signals on said display means (20) to activate at least one light indicator (20a-20d) corresponding to the instrument element to be played, when the light indicator is activated, to produce a sound to accompany the corresponding music piece.

4. A device as claimed in any one of the foregoing Claims, characterized in that said display means (20) comprise indicators (20a, 20b, 20c, 20d) representing at least a bass drum, a medium drum, a small drum and a cymbal of a set of percussion instruments.

5. A set of percussion instruments comprising:
- a pedal-operated bass drum (41);
- at least one medium drum (43);
- at least one small drum (44);
- at least one cymbal (45);
characterized in that it comprises an electronic device (1) for the study and practice of said set of percussion instruments, and comprising:
- sound generating means (13);
- control means (3) cooperating with said sound generating means (13);
- storage means (5) cooperating with said control means (3) and containing data correlated to musical events; and
- display means (20) cooperating with said control means (3);
said display means (20) presenting a number of light indicators (20a-20d), each representing a respective element of the musical instrument for study;
said light indicators (20a-20d) being activated synchronously with said musical events.
